# EUROPÄISCHE PATENTSCHRIFT

(11) **EP 2 022 972 B1**
(45) Veröffentlichungstag und Bekanntmachung des Hinweises auf die Patenterteilung: **11.12.2019**
(21) Anmeldenummer: 08104582.5
(22) Anmeldetag: 30.06.2008
(51) Int. Cl.: F02D 41/38, F02D 41/04, F02D 41/06

(54) **DRUCKHALTEFUNKTION BEI VOLLHYBRIDANTRIEB**
PRESSURE HOLD FUNCTION FOR FULLY HYBRID DRIVE
FONCTION DE MAINTIEN DE PRESSION LORS D'UN ENTRAÎNEMENT HYBRIDE COMPLET

(30) Priorität: 31.07.2007 DE 102007035824
(43) Veröffentlichungstag der Anmeldung: 11.02.2009
(73) Patentinhaber: ROBERT BOSCH GMBH, 70442 Stuttgart (DE)
(72) Erfinder: Hernier, Markus, 70839 Gerlingen (DE); Greis, Andreas, 70193 Stuttgart (DE)

(56) Entgegenhaltungen:
- EP-A1- 1 795 423
- DE-A1- 10 006 861
- DE-A1-102005 003 880
- JP-A- 2000 064 874
- US-A1- 2006 116 797
- US-A1- 2006 207 567

## Beschreibung

### Stand der Technik

Derzeit werden verstärkt Hybridantriebe für Kraftfahrzeuge entwickelt, bei denen der Hybridantrieb dadurch realisiert ist, dass zusätzlich zum Verbrennungsmotor des Fahrzeugs ein weiterer Antrieb, so z.B. ein elektrischer Antrieb, eingebaut ist. Der Nutzen dieser Entwicklung liegt hauptsächlich in der Kraftstoffverbrauchsreduktion und den niedrigen Emissionen solcher Antriebe. Bei Hybridantrieben kommen neben elektrischen Maschinen als zusätzliche Antriebe auch hydraulische Antriebe zum Einsatz. Der Einsatz hydraulischer Antriebe erstreckt sich schwerpunktmäßig auf Baumaschinen, Gabelstapler und auf militärische Anwendungszwecke.

Antriebe können neben fremdgezündeten Verbrennungsmotoren auch selbstzündende Verbrennungskraftmaschinen wie z.B. einen Dieselmotor umfassen. Das Einspritzen von Kraftstoff in die Brennräume von selbstzündenden Verbrennungskraftmaschinen, wie z.B. von Dieselmotoren, erfolgt über Hochdruckeinspritzsysteme so z.B. Hochdruckspeichereinspritzsysteme (Common-Rail). Diese Kraftstoffeinspritzsysteme stellen mithin eine Komponente in Hybridantriebssträngen dar. Fahrzeuge, die einen Hybridantrieb umfassen, der als Verbrennungsmotor einen Dieselmotor umfasst, können in Fahrsituationen geraten, wie z.B. dem rein elektrischen Fahrbetrieb, Start-Stoppsituationen oder Rekuperationsbetrieb, in denen der im Hochdruckspeicher (Common-Rail) herrschende Ist-Druck (Ist-Systemdruck) nicht mit dem Soll-Systemdruck der jeweiligen Fahrsituation eines konventionellen Antriebes, d.h. eines Antriebsstranges nur mit Verbrennungskraftmaschine, in diesem Falle einem Dieselmotor, übereinstimmt.

Beim heute erreichten Entwicklungsstand bezüglich Hochdruckspeichereinspritzsystemen, wie z.B. dem Common-Rail-Einspritzsystem, werden bei der Verbrennungsmotor Stopp-Startfunktion bereits Druckhaltefunktionen eingesetzt. Dazu wird unmittelbar vor dem Abschalten des Verbrennungsmotors in Fahrzeughaltephasen der Kraftstoffdruck im Hochdruckspeicher (Common-Rail) nicht abgebaut, sondern mittels eines Druckhalteventils weiter vorgehalten, so dass bei einem Wiederstart des Verbrennungsmotors der notwendige Kraftstoff-Einspritzdruck im Hochdruckteil des Hochdruckspeichereinspritzsystems direkt bzw. sehr schnell zur Verfügung steht. Durch das Druckhalteventil, welches dem Hochdruckspeicher zugeordnet ist, kann im Idealfall der im Hochdruckspeicher herrschende Druck gehalten werden, mithin der Systemdruck aufrechterhalten werden. Falls es zu einem schleichenden Druckverlust kommt, ist dieser jedoch sehr gering, so dass der notwendige Systemdruck durch den die den Hochdruckspeicher (Common-Rail) beaufschlagende Hochdruckpumpe sehr schnell wieder aufgebaut werden kann. Sehr kurze Startzeiten des Verbrennungsmotors sind zwingend für die Akzeptanz von Stopp-Startsystemen beim Anwender im Fahrzeug. Während aus DE 10 2005 040 783 A1 ein Verfahren zur Steuerung einer Fahrzeugantriebseinheit bekannt ist, bei dem ein kontinuierliches Vergleichen eines Gesamt-Ist-Momentes mit einem zulässigen Gesamt-Moment erfolgt, ist eine Systemdrucküberwachung in Hochdruckspeichern zwar mittels eines Druckhalteventiles bereits aus dem Stand der Technik bekannt, jedoch ist eine situationsabhängige Druckanpassung, wie sie im Rahmen von Hybridantrieben, so z.B. beim Übergang vom rein elektrischen Fahren oder vom Rekuperationsbetrieb auf den normalen Verbrennungsmotorbetrieb auftreten können, noch nicht verfügbar. DE 10 20005 040 783 A1 bezieht sich auf das kontinuierliche Vergleichen eines Gesamt-Ist-Momentes mit einem zulässigen Gesamt-Moment, wobei das Gesamt-Ist-Moment aus Einzel-Ist-Momenten mindestens zweier einzelner Motoren und das zulässige Gesamt-Moment aus zulässigen Einzel-Moment Werten der mindestens zwei Einzelmotoren berechnet wird und wobei dann eine Fehlerreaktion eingeleitet wird, wenn das Vergleichen ergibt, dass das Gesamt-Ist-Moment größer als das zulässige Gesamt-Moment ist. Diese aus dem Stand der Technik bekannte Lösung bezieht sich lediglich auf einen Gesamt-Ist-Moment-Vergleich mit einem zulässigen Gesamt-Moment.

US 2006/207567 A1 offenbart einen Verbrennungsmotor mit einer Motorbetriebssteuerung, wobei zur Verhinderung einer Verschlechterung der Emissionsleistung beim Motorstart durch Betätigen (Öffnen) eines elektromagnetischen Überdruckventils und durch Stoppen des Betriebs einer Niederdruck-Kraftstoffpumpe sowohl in einer Hochdruckzufuhrleitung als auch in einer Niederdruckleitung der Kraftstoffdruck verringert wird.

JP 2000 064874 A offenbart eine elektrisch angetriebene Kraftstoffpumpe, einen Akkumulator und eine Startschätzeinrichtung, die das Starten eines Direkteinspritzungsmotors durch ein Einschaltsignal eines Zündschalters schätzt.

DE 10 2005 003880 A1 offenbart ein Verfahren zur Steuerung einer Kraftstoffeinspritzung bei einer mit mindestens einer elektrischen Maschine ausgestatteten Verbrennungskraftmaschine, der eine Direkteinspritzungsanlage zur direkten Einspritzung von Kraftstoff in mindestens einen Brennraum der Verbrennungskraftmaschine zugeordnet ist, wobei die Direkteinspritzungsanlage eine mechanisch angetriebene Hochdruck-Kraftstoffpumpe zur Erzeugung eines Kraftstoffdrucks in einem dem mindestens einen Brennraum vorgelagerten Speichervolumen aufweist.

Während bei Stopp-Startsystemen bei konventionellen Fahrzeugantrieben der Wiederstart des Verbrennungsmotors, sei es eine selbstzündende, sei es eine fremdgezündete Verbrennungskraftmaschine in Fahrsituationen, in denen keine bzw. eine geringe Last aufgebracht werden muss, erfolgt, wird bei Fahrzeugen, die mit Hybridantrieben ausgestattet sind, ein Wiederstart der Verbrennungskraftmaschine auch bei höheren Lasten und demzufolge auch höheren Kraftstoffsolldrücken im Kraftstoffspeichereinspritzsystem (Common-Rail) vollzogen.

### Offenbarung der Erfindung

Erfindungsgemäß wird vorgeschlagen, insbesondere bei leckagefrei ausgeführten Kraftstoffeinspritzsystemen (Common-Rail), bei denen der Hochdruckspeicherkörper mit einem Druckregelventil ausgestattet ist, in Phasen, bei denen in der Regel mit Hilfe einer Kupplung die selbstzündende Verbrennungskraftmaschine vom Antriebsstrang abgekoppelt ist, den Systemdruck im Hochdruckspeicher (Common-Rail) möglichst hoch zu halten. Danach wird vorgeschlagen, unmittelbar vor dem Wiedereinkuppeln der selbstzündenden Verbrennungskraftmaschine den Systemdruck im Hochdruckspeicherkörper an das Druckerfordernis, welcher der aktuellen Fahrsituation angepasst ist, anzupassen. Für den Fall, dass eine Druckreduktion erforderlich ist, wird diese durch eine Betätigung des Druckregelventils erfolgen. Bei einem erforderlichen Systemdruckanstieg im Hochdruckspeicherkörper (Common-Rail) bleibt das Druckregelventil hingegen geschlossen. In diesem Falle kann der Systemdruck mit Hilfe der Hochdruckpumpe, welche den Systemdruck im Hochdruckspeicherkörper (Common-Rail) erzeugt, aufgebaut werden.

Die Ansteuerung des Druckregelventils kann entweder von einem separaten Steuergerät oder aber auch von dem Motorsteuergerät oder dem Kupplungssteuergerät aus erfolgen. Die erwähnten Steuergeräte sollen jedoch derart miteinander kommunizieren, dass relevante hybridspezifische Fahrzeugfunktionen, wie beispielsweise ein Öffnen einer Kupplung zwischen Verbrennungskraftmaschine und einem weiteren zusätzlichen Antrieb, so z.B. eines E-Antriebes, welche in einem parallelen Hybridantriebsstrang eingesetzt ist, erkannt wird und gegebenenfalls mit einer Softwarefunktion als Signal für die Ansteuerung oder Nicht-Ansteuerung des Druckregelventils, welches dem Hochdruckspeicher zugeordnet ist, aufbereitet werden kann.

In einem elektrischen Hybridantrieb werden in einem als Parallelhybrid ausgelegten Antriebsstrang eine Verbrennungskraftmaschine, im vorliegenden Fall eine selbstzündende Verbrennungskraftmaschine, wie z.B. ein Dieselmotor, sowie ein zusätzlicher Antrieb, in diesem Falle ein E-Antrieb, mit der gleichen Drehzahl betrieben. Der Vollständigkeit halber sei erwähnt, dass die vorliegende Erfindung auch bei anderen Verbrennungsmotoren, wie z.B. direkteinspritzenden Ottomotoren mit quasi leckagefreien Injektoren eingesetzt werden kann sowie anstelle des hier als Hybridantrieb eingesetzten E-Antriebes ein Hydraulikantrieb in Frage kommt.

Im Rekuperationsfalle gelangt die dem Fahrzeug innewohnende Bewegungsenergie über die Antriebsachse an den in diesem Falle im Betriebsmodus Generator arbeitenden mindestens einen E-Antrieb, wobei die Verbrennungskraftmaschine in dieser Betriebsphase mechanisch vom Antriebsstrang getrennt ist. Dies geschieht über eine Kupplung. Der mindestens eine zusätzliche E-Antrieb und eine diesem zugeordnete Hochvoltbatterie sind so dimensioniert, dass diese die in kurzen Zeitintervallen anfallenden hohen Leistungen auffangen können. Die Hochleistungselektronik mit AC/DC-Wandler sorgt für eine gegebenenfalls erforderliche Aufbereitung der von dem mindestens einen zusätzlichen Antrieb, in diesem Fall mindestens einen E-Antrieb, erzeugten elektrischen Energie, so dass diese als Gleichstrom einer definierten Qualität in der Hochvoltbatterie gespeichert werden kann. Des Weiteren kann bei einem Hybridantrieb im Rekuperationsbetriebsmodus ein 14 Volt-Fahrzeugbordnetz von der Hochvoltbatterie versorgt werden, was über einen DC/DC-Wandler erfolgt.

Der Hybridantriebsstrang wird in vorteilhafter Weise als Parallelhybridantrieb ausgelegt und kann sowohl eine als auch zwei Kupplungen umfassen. In der Ausführungsform des Parallelhybridantriebes mit zwei Kupplungen befindet sich eine erste Kupplung zwischen dem mindestens einen zusätzlichen E-Antrieb und dem Fahrzeuggetriebe, während sich die zweite Kupplung zwischen dem als selbstzündende Verbrennungskraftmaschine ausgeführten Verbrennungsmotor und dem mindestens einen zusätzlichen Antrieb, in diesem Falle einem E-Antrieb, befindet. Bei Hybridantrieben, deren Verbrennungskraftmaschine einen dieser zugeordneten Starter aufweist, kann die erste Kupplung zwischen dem einen mindestens einen zusätzlichen E-Antrieb und dem Fahrzeuggetriebe entfallen. Mit einem Parallelhybridantrieb, der wie oben geschildert z.B. zwei Kupplungen umfasst, ist es möglich, während des Fahrvorganges die Verbrennungskraftmaschine mechanisch vom Antriebsstrang zu trennen, was durch die im Parallelhybridantrieb vorgesehene zweite Kupplung erfolgt. Dadurch kann eine größere Bewegungsenergie mit den Hybridkomponenten abgefangen, d.h. im Rekuperationsmodus über die mechanischen Komponenten an den mindestens einen zusätzlichen E-Antrieb übertragen und zur Ladung z.B. der Hochvoltbatterie und der Speisung des 14 Volt-Bordnetzes genutzt werden.

Sobald über die zweite Kupplung die selbstzündende Verbrennungskraftmaschine von dem mindestens einen zusätzlichen E-Antrieb getrennt ist, verändert sich der Ist-Systemdruck im Hochdruckeinspritzsystem (Common-Rail) im Vergleich zum Soll-Systemdruck. Dieser Zustand kann nicht nur während der in der Regel kurz andauernden Kupplungsvorgänge auftreten, sondern auch während Haltephasen und während vergleichsweise längeren elektrischen Fahrphasen, in denen der im Hochdruckspeicherkörper (Common-Rail) aufgebaute Systemdruck schleichend nachlässt.

Im Leerlauf der Verbrennungskraftmaschine entspricht der Systemdruck, der im Hochdruckspeicherkörper (Common-Rail) vorgehalten wird, einem ersten Druckniveau. Bei der Druckhaltefunktion für konventionelle Stopp-Startsysteme hat das dem Hochdruckspeicher zugeordnete Druckregelventil mit Hilfe einer in dessen elektronischer Steuerung abgelegten Funktion für die Zeit des Motorstopps, d.h. die Zeitspanne, während der die Verbrennungskraftmaschine abgeschaltet ist, den Systemdruck möglichst aufrechtzuerhalten. Beim Betrieb des Fahrzeugs mit selbstzündender Verbrennungskraftmaschine liegt ein definierter Systemdruck im Hochdruckspeicherkörper vor; in diesem herrscht ein zweites Druckniveau. Sobald die selbstzündende Verbrennungskraftmaschine vom Parallelhybridantriebsstrang abgekuppelt wird und eine Fahrphase rein elektrisches Fahren bzw. eine Rekuperationsphase beginnt, oder das Fahrzeug hält, wird das Druckregelventil, welches dem Hochdruckspeicherkörper zugeordnet ist, derart angesprochen, dass der Systemdruck im Hochdruckspeicherkörper gehalten wird und nicht entweichen kann. Das entsprechende Ansteuersignal für diesen Vorgang an das Druckregelventil ergeht entweder von der elektronischen Ventilsteuerung oder dem Fahrzeugsteuergerät oder dem Kupplungssteuergerät.

Sobald die selbstzündende Verbrennungskraftmaschine im Parallelhybridstrang wieder zugeschaltet wird und der Druck im Hochdruckspeicherkörper (Common-Rail) sich vom Soll-Systemdruck des aktuellen Betriebspunktes der selbstzündenden Verbrennungskraftmaschine unterscheidet, kann mit Hilfe des Druckregelventils der herrschende Systemdruck schnell angepasst werden. Für den Fall, dass der Soll-Systemdruck im Hochdruckspeicherkörper (Common-Rail) niedriger ist als der aktuelle Druck im Hochdruckspeicherkörper, wird das Druckregelventil so lange geöffnet, bis der Soll-Systemdruck erreicht ist. Liegt der Soll-Systemdruck im Hochdruckspeicherkörper (Common-Rail) höher als der aktuelle Druck im Hochdruckspeicherkörper, bleibt das Druckregelventil so lange geschlossen, bis ein vorgegebener Soll-Systemdruck erreicht ist.

Bei konventionellen Antrieben, in denen lediglich eine Verbrennungskraftmaschine eingesetzt wird, wird das Druckregelventil vom Motorsteuergerät angesteuert. Bei Betrieb eines mit Hybridantrieb ausgestatteten Fahrzeugs mit mindestens einer elektrischen Maschine ist eine Koordination des Verbrennungsmotors mit der mindestens einen elektrischen Maschine erforderlich, die im Fahrzeugsteuergerät (VCU) stattfindet. Das dem Hochdruckspeicherkörper (Common-Rail) zugeordnete Druckregelventil kann der erfindungsgemäß vorgeschlagenen Lösung folgend, außer durch dessen elektronische Steuereinheit von Fahrzeugsteuergerät (VCU) oder von einem Kupplungssteuergerät (CCU) direkt angesteuert werden. Eine andere Möglichkeit stellt eine Signalweitergabe aus dem Kupplungssteuergerät bzw. dem Fahrzeugsteuergerät an die elektronische Steuerung des Druckregelventils dar. Die eigentliche Ansteuerung findet in diesem Falle wie beim konventionellen, d.h. nicht hybridischen Antrieb ohne mindestens eine zusätzliche weitere elektrische Maschine mit Hilfe des elektronischen Steuergerätes des Druckregelventils statt.

### Kurze Beschreibung der Zeichnungen

Anhand der Zeichnungen wird die Erfindung nachstehend eingehender beschrieben.

Es zeigen:
- Figur 1: eine Prinzipdarstellung eines Hybridstranges, der hier als Parallelhybridantriebsstrang ausgebildet ist,
- Figur 2: ein Kennfeld des Systemdrucks innerhalb eines Hochdruckspeicherkörpers (Common-Rail), aufgetragen über Last und Drehzahl der Verbrennungskraftmaschine,
- Figur 3: ein Hochdruckspeichereinspritzsystem mit Druckregelventil und
- Figur 4: die Vernetzung von Hybridkomponenten eines Hybridantriebs für ein Fahrzeug mit dessen CAN-Fahrzeugbus.

### Ausführungsformen

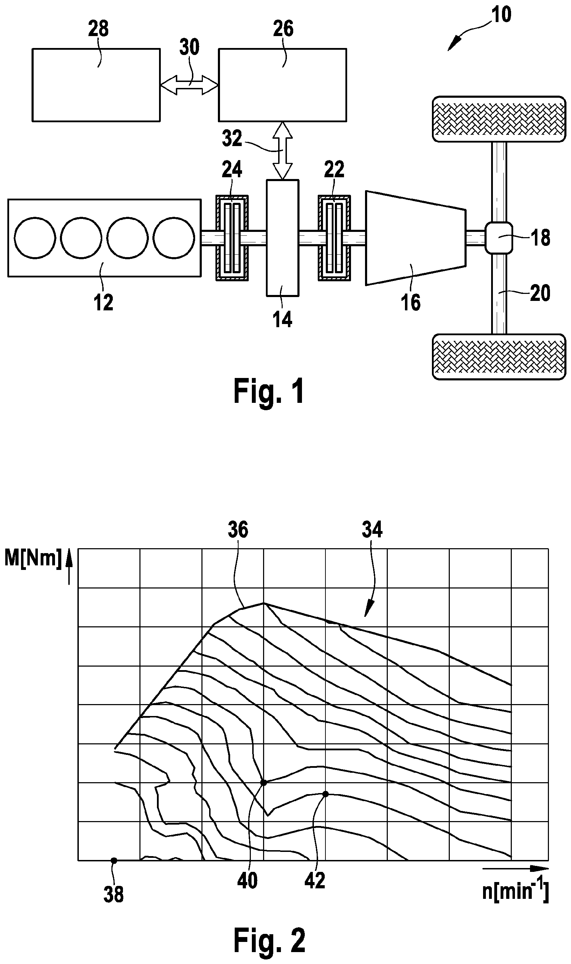

Der Darstellung gemäß Figur 1 ist ein Hybridantriebsstrang für ein Kraftfahrzeug zu entnehmen, wobei der in Figur 1 dargestellte Hybridantriebsstrang als Parallelhybridantriebsstrang ausgeführt ist.

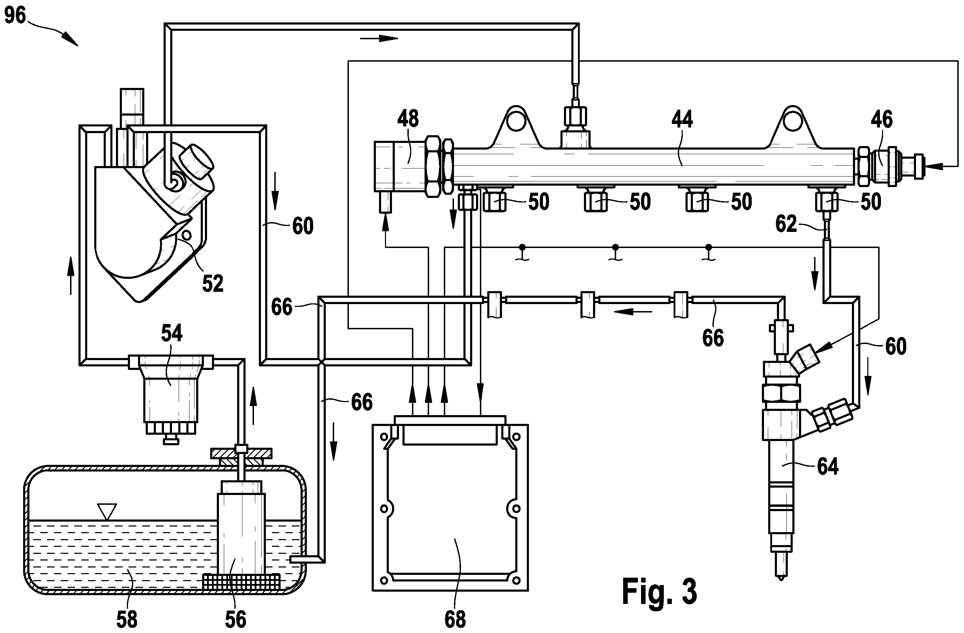

Wie Figur 1 zeigt, umfasst ein Hybridantriebsstrang 10 eine Verbrennungskraftmaschine 12. Die Verbrennungskraftmaschine 12 kann entweder als eine fremdgezündete Verbrennungskraftmaschine, wie z.B. ein direkteinspritzender Ottomotor (BDE), oder aber als selbstzündende Verbrennungskraftmaschine, z.B. als Dieselmotor ausgeführt sein, der über ein Hochdruckspeichereinspritzsystem 96 (vergleiche Darstellung gemäß Figur 3) mit Kraftstoff versorgt wird. Die nachfolgende Beschreibung bezieht sich auf die Verbrennungskraftmaschine 12, die als eine selbstzündende Verbrennungskraftmaschine ausgeführt ist und über ein Hochdruckspeichereinspritzsystem 96 mit Kraftstoff versorgt wird.

Der Hybridantriebsstrang 10 gemäß der Darstellung in Figur 1 umfasst neben der Verbrennungskraftmaschine 12 mindestens einen E-Antrieb 14. Der mindestens eine E-Antrieb 14 wirkt unter Zwischenschaltung einer ersten Kupplung 22 mit einem Fahrzeuggetriebe 16 zusammen, welches seinerseits auf einen Achsantrieb 18 wirkt. Über den Achsantrieb 18 wird eine hier nur schematisch dargestellte Antriebsachse 20 angetrieben.

Der in der Darstellung gemäß Figur 1 als Parallelhybridantriebsstrang ausgeführte Hybridantriebsstrang 10 umfasst neben der bereits angesprochenen ersten Kupplung 22 zwischen dem mindestens einen E-Antrieb 14 und dem Getriebe 16 eine weitere, zweite Kupplung 24. Über die weitere, zweite Kupplung 24 können die Verbrennungskraftmaschine 12 und der mindestens eine E-Antrieb 14 voneinander getrennt werden. Im Rekuperationsfall gelangt die Fahrzeugbewegungsenergie über die Antriebsachse 20 und das in umgekehrte Richtung beaufschlagte Fahrzeuggetriebe 16 und die geschlossene erste Kupplung 22 an den mindestens einen E-Antrieb 14, der im Generatorbetriebsmodus betrieben wird. In dieser Betriebsphase ist die Verbrennungskraftmaschine 12 mechanisch vom Antriebsstrang 10 durch die offen stehende zweite Kupplung 24 getrennt. Der mindestens eine E-Antrieb 14 und eine diesem zugeordnete Hochvoltbatterie 26 sind so groß dimensioniert, dass diese in kurzen Zeitintervallen anfallende hohe Leistungen der Fahrzeugbewegungen auffangen können, d.h. im Rekuperationsfall über den mindestens einen E-Antrieb 14 eingespeiste Energie speichern können. Eine Hochleistungselektronik, die einerseits mindestens einen AC/DC-Wandler 32 und andererseits mindestens einen Gleichstromwandler 30 umfasst, sorgt für eine notwendige Aufbereitung der von dem mindestens einen E-Antrieb 14 generierten elektrischen Energie, so dass diese als Gleichstrom einer definierten Qualität in die mindestens eine Hochvoltbatterie 26 eingespeist werden kann. Ferner kann üblicherweise bei einem Hybridantrieb ein in Figur 1 nicht dargestelltes Fahrzeugbordnetz (14 Volt-Bordnetz) von der Hochvoltbatterie 26 aus versorgt werden. In der Darstellung gemäß Figur 1 wäre das Fahrzeugnetz der Niedervoltbatterie 28 gleichzusetzen.

Über die zweite Kupplung 24 zwischen der Verbrennungskraftmaschine 12 und dem mindestens einen E-Antrieb 14 ist es möglich, während des Fahrvorgangs die Verbrennungskraftmaschine 12 mechanisch vom Hybridantriebsstrang 10 zu trennen, so dass eine größere Bewegungsenergie von den Hybridkomponenten aufgefangen und in elektrische Energie umgewandelt werden kann. Sobald über die zweite Kupplung 24 die Verbrennungskraftmaschine 12 vom mindestens einen E-Antrieb 14 getrennt ist, verändert sich ein Ist-Systemdruck innerhalb eines Hochdruckspeicherkörpers 44 (vergleiche Figur 3) des Hochdruckspeichereinspritzsystems 96 im Vergleich zu einem vorgegebenen Soll-Systemdruck. Dieser Zustand tritt in der Regel nicht nur während kurzer Kuppelvorgänge auf, sondern auch in Haltephasen des Kraftfahrzeugs und während vergleichsweise längerer elektrischer Fahrphasen.

Figur 2 zeigt das Kennfeld des im Hochdruckspeicherkörper (Common-Rail) eines Hochdruckspeichereinspritzsystems herrschenden Systemdruckes, aufgetragen über die Drehzahl und die Last einer Verbrennungskraftmaschine.

Wie Figur 2 entnommen werden kann, entspricht ein durch Bezugszeichen 38 dargestellter Druck im Kennfeld 34 gemäß der Darstellung in Figur 2, einem Systemdruck bei Leerlauf der Verbrennungskraftmaschine. Dieser Zustand der Verbrennungskraftmaschine 12 ist durch eine geringe Leerlaufdrehzahl und einer nahe bei Null liegenden Last gekennzeichnet. Bei der üblicherweise bei konventionellen Verbrennungskraftmaschinen, insbesondere bei selbstzündenden Verbrennungskraftmaschinen mit Hochdruckspeichereinspritzsystem implementierten Druckhaltefunktion für Stopp/Startsysteme, wird ein Druckregelventil 48 (vergleiche Darstellung gemäß Figur 3) für die Zeit eines Motorstopps, d.h. bei abgeschalteter Verbrennungskraftmaschine 12, im Modus Druckhaltefunktion gehalten, so dass der im Hochdruckspeicherkörper 44 des Hochdruckspeichereinspritzsystems 96 herrschende Systemdruck möglichst lange aufrecht erhalten bleibt und sich kein schleichender Druckverlust einstellt.

Beim Betrieb des Kraftfahrzeuges mit der Verbrennungskraftmaschine 12 liegt ein definierter Systemdruck im Hochdruckspeicherkörper 44 vor, im Kennfeld 34 gemäß der Darstellung in Figur 2 durch Position 40 identifiziert. Sobald die Verbrennungskraftmaschine vom Hybridantriebsstrang 10 abgekuppelt wird und sich z.B. eine rein elektrische Fahrphase anschließt, bzw. eine Rekuperationsphase beginnt, oder das Fahrzeug anhält, wird das Druckregelventil 48 derart angesteuert, dass der Druck im Hochdruckspeicherkörper 44 nicht entweichen kann. In diesem Fall übernimmt das Druckregelventil 48 die Druckhaltefunktion. Der Befehl für diese Funktion kann entweder von einer Steuereinheit 68 (EDC) oder einem Fahrzeugsteuergerät 82 (VCU) oder auch von einem Kupplungssteuergerät 78 (CCU) ausgehen. In Kennfeld 34 gemäß der Darstellung in Figur 2 ist der Systemdruck, der sich im Hochdruckspeicherkörper 44 kurz vor Abstellen der Verbrennungskraftmaschine 12 bzw. kurz vor deren Abkuppeln vom Hybridantriebsstrang 10 durch Betätigung der zweiten Kupplung 24 einstellt, durch Bezugszeichen 40 identifiziert.

Ist nun die rein elektrische Fahrphase bzw. die Rekuperationsphase beendet, und soll die Verbrennungskraftmaschine 12 wieder zugeschaltet werden und wird mittels eines Drucksensors 46 erfasst, dass der Systemdruck im Hochdruckspeicherkörper 44 sich von der Sollgröße des Systemdrucks zum Zeitpunkt des aktuellen Betriebspunktes der Verbrennungskraftmaschine unterscheidet, kann durch eine Ansteuerung des Druckregelventiles 48 der Systemdruck sehr schnell nachgesteuert werden. Wird über den Drucksensor 46 erkannt, dass ein Soll-Systemdruck 42, der dem aktuellen Betriebspunkt der Verbrennungskraftmaschine 12 entspricht, und der Druck im Hochdruckspeicherkörper 44 niedriger ist, so wird das Druckregelventil 48 geschlossen und es erfolgt ein Druckaufbau, bis der Soll-Systemdruck erreicht ist. Im umgekehrten Falle, d.h. wenn der Soll-Systemdruck im Hochdruckspeicherkörper 44 (Common-Rail) höher liegt als der aktuelle, tatsächlich im Hochdruckspeicherkörper 44 herrschende Druck, so wird das Druckregelventil 48 so lange geöffnet und Kraftstoff abgelassen, bis der Soll-Systemdruck erreicht ist.

Der Vollständigkeit halber sei erwähnt, dass durch Bezugszeichen 36 die Volllast-Kennlinie der Verbrennungskraftmaschine 12 im Kennfeld 34 gemäß der Darstellung in Figur 2 dargestellt ist.

Figur 3 zeigt den schematischen Aufbau eines Hochdruckspeichereinspritzsystems zur Kraftstoffversorgung selbstzündender Verbrennungskraftmaschinen.

Das Hochdruckspeichereinspritzsystem 96 umfasst den in der Regel als geschweißtes Bauteil oder als Schmiedebauteil ausgebildeten Hochdruckspeicherkörper 44 (Common-Rail). Der Hochdruckspeicherkörper 44 ist als rohrförmiges, länglich gestrecktes Bauteil ausgebildet und weist eine Anzahl von Anschlussstutzen 50 auf. Die Anzahl von Anschlussstutzen entspricht der Anzahl von mit unter Systemdruck stehendem Kraftstoff zu versorgenden Kraftstoffinjektoren 64. Daneben ist am Umfang des in der Regel rohrförmig ausgebildeten Hochdruckspeicherkörpers 44 gemäß der Darstellung in Figur 3, ein Anschlussstutzen vorgesehen, an dem eine von der Hochdruckförderpumpe 52 kommende und von dieser beaufschlagte Hochdruckleitung 60 angeschlossen wird. Des Weiteren befindet sich an einer Stirnseite des in der Regel rohrförmig ausgebildeten Hochdruckspeicherkörpers 44 (Common-Rail) das Druckregelventil 48 und auf der diesem gegenüberliegenden Stirnseite des Hochdruckspeicherkörpers 44 der Drucksensor 46.

Der Systemdruck im Hochdruckspeicherkörper 44 wird über die bereits erwähnte Hochdruckpumpe 52 erzeugt. Diesem ist ein Kraftstofffilter 54 vorgeschaltet. Der Kraftstofffilter 54 wiederum ist einer Elektrokraftstoffpumpe 56 nachgeschaltet, welche den Kraftstoff aus einem Tank 58 ansaugt. In den Tank 58 mündet ein Rücklauf 66, in den von den Kraftstoffinjektoren 64 abgesteuerte Steuermenge, so z.B. bei Druckentlastung von Steuerräumen abgesteuerter Kraftstoff bzw. Leckage in den Tank zurückgefördert wird.

Aus Figur 3 geht hervor, dass das Druckregelventil 48 und der dem Hochdruckspeicherkörper 44 (Common-Rail) zugeordnete Drucksensor 46 mit der Steuereinheit 68 (EDC) verbunden sind. Die Druckhaltefunktion wird dem Druckregelventil 48 über die Ansteuerung mit dem entsprechenden Signal von der Steuereinheit 68 (EDC) übermittelt. Der jeweils herrschende Druck im Hochdruckspeicherkörper 44 wird über den Drucksensor 46 erfasst und über die in Figur 3 dargestellte Signalleitung an die Steuereinheit 68 (EDC) übermittelt.

Damit ist es über die Steuereinheit 68 (EDC) möglich, ein Druckregelventil 48 entgegen einer Druckhaltefunktion zu öffnen, so dass Kraftstoff aus dem Hochdruckspeicherkörper 44 in den Kraftstofftank 58 entweicht; andererseits ist durch die entsprechende Ansteuerung des Druckregelventils 48 über die Steuereinheit 68 (EDC) eine Erhöhung des Systemdrucks im Hochdruckspeicherkörper 44 möglich, wenn das Druckregelventil 48 in den Modus Druckhaltefunktion angesteuert wird. In diesem Falle erfolgt die Druckerhöhung im Hochdruckspeicherkörper 44 durch dessen Beaufschlagung durch die Hochdruckpumpe 52.

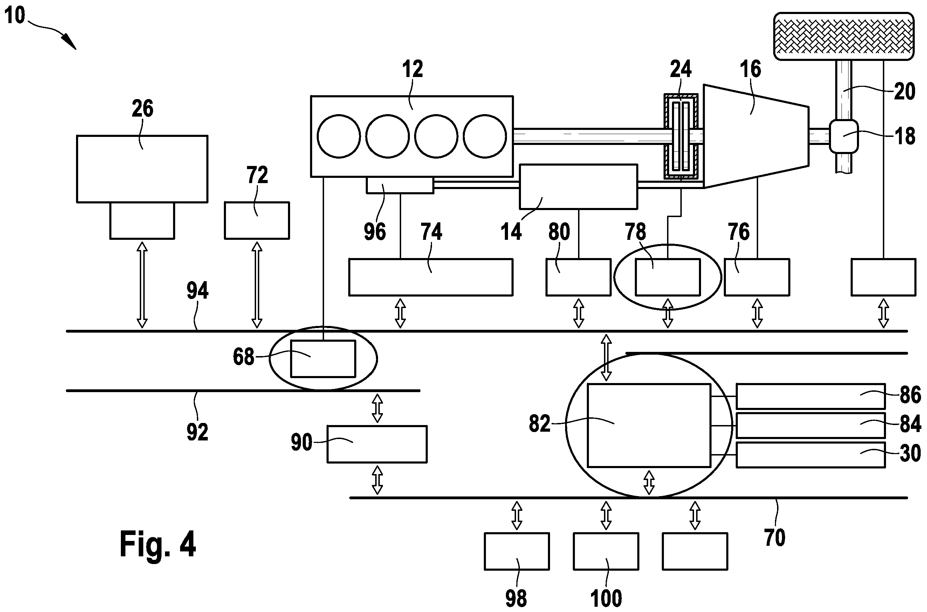

Figur 4 zeigt einen Hybridantriebsstrang 10, mit Verbrennungskraftmaschine und mindestens einer Kupplung, welche die Verbrennungskraftmaschine 12 und den mindestens einen E-Antrieb 14 voneinander trennt. Die erste Kupplung 22, vgl. Fig. 1 kann z.B. im Getriebe 16 verbaut sein oder auch gar nicht vorhanden sein.

Der Darstellung gemäß Figur 4 ist des Weiteren zu entnehmen, dass sich zwischen dem Getriebe 16 je nach Ausführungsform mit Doppelkupplungsgetriebe und der Verbrennungskraftmaschine 12 die erste oder zweite Kupplung 22 bzw. 24 befindet.

Der mindestens eine E-Antrieb 14 ist direkt mit dem Getriebe 16 gekoppelt und treibt dieses eingangsseitig an. Ausgangsseitig wirkt das Getriebe 16 auf den Achsantrieb 18, der seinerseits die Antriebsachse 20 des Hybridantriebsstrangs 10 antreibt. Des Weiteren sind im Antriebsstrang 10 gemäß der darstellenden Figur 4 die Traktionsbatterie 26 dargestellt, bei der es sich in der Regel um eine Hochvoltbatterie handelt. Mit Bezugszeichen 72 ist ein z.B. als 14 Volt-Bordnetz ausgelegtes Bordnetz angedeutet.

Bezugszeichen 70 bezeichnet einen Serien-CAN, einen Fahrzeugbus, über den zwischen einzelnen Steuergeräten auszutauschende Signale bzw. Ansteuerimpulse übermittelt werden. Wie Figur 4 entnehmbar ist, umfasst der mit Bezugszeichen 70 bezeichnete CAN-Bus z.B. Schnittstellen zu einem ESP-System 98 bzw. ASR-System 100. Über ein Gateway 90 ist der CAN-Bus mit einem Gateway-CAN-Bus 92 verbindbar. Über einen Hybrid-CAN-Bus 94 werden die Aggregate mit dem Fahrzeugsteuergerät (VCU) 82 verbunden. Der Gateway-CAN-Bus 92 verbindet die Steuereinheit 68 mit dem Fahrzeugsteuergerät 82. Der serienmäßig vorgesehene CAN-Bus 70 übernimmt bei konventionellen Antrieben die Kommunikation zwischen den Aggregaten zum Fahrzeugsteuergerät 68.

Über das Gateway 90 kommuniziert der Serien-CAN 70, der mit Schnittstellen zu Komponenten mit dem ESP-System 98 in dem ASR-System 100 versehen ist, auch mit einem Fahrzeugsteuergerät 82. Über das Gateway 90 kann eine Verbindung mit der Steuereinheit 68 geschaffen werden, die mit einem Hybrid-CAN-Bus (vergleiche Bezugszeichen 94) kommuniziert. Der Hybrid-CAN-Bus 94 übernimmt den Signal- und Ansteuerungsaustausch zur Traktionsbatterie 26 und zum Fahrzeugbordnetz 72 so z.B. dann, wenn das Fahrzeugbordnetz 52 im rein elektrischen Fahrbetrieb über den generatorisch betriebenen mindestens einen E-Antrieb 14 gespeist werden kann. Wie aus Figur 4 hervorgeht, kommuniziert die Steuereinheit 68 mit dem Hochdruckspeichereinspritzsystem 96 zur Versorgung der Verbrennungskraftmaschine 12, wobei die einzelnen Komponenten des Hochdruckspeichereinspritzsystems 96, insbesondere das dem Hochdruckspeicherkörper 44 zugeordnete Druckregelventil 48 der dem Hochdruckspeicherkörper 44 zugeordnete Drucksensor 46 aus Gründen der Übersicht in Figur 4 fortgelassen wurden (vgl. jedoch Fig. 3). Über den Hybrid-CAN-Bus 94 erfolgt auch die Ansteuerung eines Klimaanlagenkompressors (vergleiche Bezugszeichen 74). Figur 4 zeigt des Weiteren, dass der mindestens eine E-Antrieb 14 über ein separates Steuergerät 80 verfügt, ebenso wie die Kupplung 24. In der Darstellung gemäß Figur 4 ist die Ausführungsvariante eines Parallelhybridantriebs mit Doppelkupplungsgetriebe dargestellt.

Die Kupplung 24 wird über ein durch Bezugszeichen 78 angedeutetes Kupplungssteuergerät angesteuert; dem Getriebe 16 des Hybridantriebsstranges 10 ist des Weiteren ein Getriebesteuergerät (GCU) 76 zugeordnet. Der Vollständigkeit halber sei erwähnt, dass das Fahrzeugsteuergerät 82 jeweils im Signalaustausch mit einem Fahrwertgeber 86 bzw. einem Steuergerät für die Kühlung 84 steht bzw. den Gleichstromregler 30 (vergleiche Darstellung gemäß Figur 1) zwischen dem Bordnetz und der Hochvoltbatterie 26, um ein Beispiel zu nennen, regelt.

In der Darstellung gemäß Figur 4 sind die Steuereinheit 68 sowie das Kupplungssteuergerät 78 herausgehoben. Über diese beiden Steuereinheiten 68, 78 kann das Druckregelventil 48, über welches die Druckhaltefunktion am Hochdruckspeicherkörper 44 implementiert werden kann, angesteuert werden. Die Steuereinheit 68 ist bereits im Zusammenhang mit der Beschreibung von Figur 3 erwähnt. Über das in Figur 4 dargestellte Kupplungssteuergerät 78 kann z.B. die Ansteuerung der zweiten Kupplung 24, die die Verbrennungskraftmaschine 12 vom mindestens einen E-Antrieb trennt, erfolgen. Je nach geschlossener Position der Kupplung 24 kann erkannt werden, ob die Verbrennungskraftmaschine 12 mit dem Hybridantriebsstrang 10 gekoppelt oder von diesem abgekoppelt ist. Über dieses Signal, welches im Kupplungssteuergerät 78 vorliegt, kann das Druckregelventil 48 derart angesteuert werden, dass der Druck im Hochdruckspeicherkörper 44 nicht entweichen kann und eine Druckhaltefunktion aktiviert wird. Der Befehl für diesen Vorgang kann entweder von der Steuereinheit 68, wie oben bereits beschrieben, oder dem Motorsteuergerät 82 oder dem bereits erwähnten Kupplungssteuergerät 78 ausgehen. Kurz vor dem Zuschalten der Verbrennungskraftmaschine 12, d.h. gegen Ende der Betriebsphase rein elektrisches Fahren bzw. gegen der Ende der Betriebsphase Rekuperationsbetrieb, wird der aktuell im Hochdruckspeicherkörper 44 herrschende Systemdruck erfindungsgemäß angepasst und zwar derart, dass bei einem zu hohen Systemdruck im Hochdruckspeicherkörper 44 Kraftstoff aus diesem in den Tank 58 abgesteuert wird, oder bei einem zu niedrigen Systemdruck im Hochdruckspeicherkörper 44 ein Aufbau des Systemdrucks in diesem über die Hochdruckpumpe 52 erfolgt.

Gemäß der Darstellung in Figur 4, bestehen also demnach mehrere Möglichkeiten, das Druckregelventil 58 anzusteuern. Dazu eignen sich neben der Steuereinheit 68 auch das Fahrzeugsteuergerät 82 und das Kupplungssteuergerät 78. Eine andere Möglichkeit besteht in der Signalweitergabe aus dem Kupplungssteuergerät 78 und des Fahrzeugsteuergeräts 82 und von dort an die Steuereinheit 68. Die eigentliche Ansteuerung findet in diesem Falle wie bei konventionellen, d.h. bei Antriebssträngen ohne hybride Komponenten mit Hilfe der Steuereinheit 68 unmittelbar statt.

Wenngleich der in den Figuren 1 und 4 dargestellte Hybridantriebsstrang anhand mindestens eines zusätzlichen E-Antriebs 14 beschrieben wurde, so ist es selbstverständlich möglich, den Hybridantriebsstrang 10, sei es ein einfacher Hybridantriebsstrang, sei es ein Parallelhybridantriebsstrang wie in Figur 1 dargestellt, anstelle mit mindestens einem E-Antrieb 14, mit einem hydraulischen Antrieb anstelle eines E-Antriebes zu versehen. Die Verbrennungskraftmaschine 12 kann gemäß den oben stehenden Ausführungen außer als selbstzündende Verbrennungskraftmaschine mit einem Hochdruckspeicherdrucksystem 96, auch als direkt einspritzender Ottomotor mit leckagefreien Kraftstoffinjektoren 64 ausgestaltet sein. Bei diesen Konzepten von Verbrennungskraftmaschinen ist die Implementierung der erfindungsgemäß vorgeschlagenen Systemdrucküberwachung in einem Kraftstoffspeicher bzw. -verteiler und dessen Anpassung abhängig vom Betriebspunkt der Verbrennungskraftmaschine 12 ebenfalls einsetzbar.

## Patentansprüche

1. Verfahren zur Aufrechterhaltung oder Anpassung eines Systemdrucks in einem Kraftstoffeinspritzsystem (96) einer Verbrennungskraftmaschine (12), die Teil eines Hybridantriebsstrangs (10) ist, der mindestens einen weiteren Antrieb (14) umfasst, mit nachfolgenden Verfahrensschritten:
(a) ein Systemdruckniveau in einem Hochdruckspeicherkörper (44) des Kraftstoffeinspritzsystems (96) wird mittels eines Drucksensors (46) kontinuierlich überwacht,
(b) in Betriebsmodi, in denen die Verbrennungskraftmaschine (12) vom Hybridantriebsstrang (10) getrennt ist, erfolgt die Aufrechterhaltung oder Anpassung des Systemdrucks über ein Druckregelventil (48),
(c) die Ansteuerung des Druckregelventils (48) erfolgt über eine Steuereinheit (68), ein Fahrzeugsteuergerät (82) oder ein Kupplungssteuergerät (78),
wobei beim Abkuppeln der Verbrennungskraftmaschine (12) vom Hybridantriebsstrang (10) das Druckregelventil (48) über das Kupplungssteuergerät (78), die Steuereinheit (68) oder das Fahrzeugsteuergerät (82) derart angesteuert wird, dass eine im Druckregelventil (48) implementierte Druckhaltefunktion aktiviert wird, und
wobei kurz vor einem Zuschalten der Verbrennungskraftmaschine (12) der aktuell im Hochdruckspeicherkörper (44) herrschende Systemdruck angepasst wird, und zwar derart, dass bei einem zu hohen Systemdruck im Hochdruckspeicherkörper (44) Kraftstoff aus diesem in einen Tank (58) abgesteuert wird, oder bei einem zu niedrigen Systemdruck im Hochdruckspeicherkörper (44) ein Aufbau des Systemdrucks in diesem über eine Hochdruckpumpe (52) erfolgt.

2. Verfahren gemäß Anspruch 1, **dadurch gekennzeichnet, dass** das Druckregelventil (48) über die Steuereinheit (68) oder das Kupplungssteuergerät (78) direkt, oder über das Fahrzeugsteuergerät (82) oder das Kupplungssteuergerät (78) indirekt angesteuert wird.

3. Hybridantriebsstrang (10) mit einer Verbrennungskraftmaschine (12) mindestens einem weiteren Antrieb (14) und mindestens einer Kupplung (22, 24), wobei die Verbrennungskraftmaschine (12) eine selbstzündende Verbrennungskraftmaschine ist, die ein Hochdruckspeichereinspritzsystem (96) umfasst, dessen Hochdruckspeicherkörper (44) über ein Druckregelventil (48) verfügt, welches einen Systemdruck im Hochdruckspeicherkörper (44) abhängig vom vor einem Wiedereinkuppeln in den Hybridantriebsstrang vorliegenden Soll-Systemdruck (42) für den aktuellen Betriebspunkt der Verbrennungskraftmaschine (12) regelt, wobei dem Hochdruckspeicherkörper (44) ein Drucksensor (46) zugeordnet ist und der jeweils herrschende Druck im Hochdruckspeicherkörper (44) über den Drucksensor (46) erfasst wird, **dadurch gekennzeichnet, dass** das Druckregelventil (48) über ein Kupplungssteuergerät (78), eine Steuereinheit (68) oder ein Fahrzeugsteuergerät (82) derart angesteuert wird, dass beim Abkuppeln der Verbrennungskraftmaschine (12) vom Hybridantriebsstrang (10) eine im Druckregelventil (48) implementierte Druckhaltefunktion aktiviert wird, und kurz vor einem Zuschalten der Verbrennungskraftmaschine (12) der aktuell im Hochdruckspeicherkörper (44) herrschende Systemdruck angepasst wird, und zwar derart, dass bei einem zu hohen Systemdruck im Hochdruckspeicherkörper (44) Kraftstoff aus diesem in einen Tank (58) abgesteuert wird, oder bei einem zu niedrigen Systemdruck im Hochdruckspeicherkörper (44) ein Aufbau des Systemdrucks in diesem über eine Hochdruckpumpe (52) erfolgt.

4. Hybridantriebsstrang (10) gemäß Anspruch 3, **dadurch gekennzeichnet, dass** der Hybridantriebsstrang (10) als Parallelhybridantriebsstrang ausgeführt ist und eine erste Kupplung (22) zwischen dem mindestens einen Antrieb (14) und dem Fahrzeuggetriebe (16) sowie eine zweite Kupplung (24) zwischen dem mindestens einen Antrieb (14) und der Verbrennungskraftmaschine (12) umfasst.

5. Hybridantriebsstrang (10) gemäß Anspruch 3, **dadurch gekennzeichnet, dass** das Druckhalteventil (48), welches dem Hochdruckspeicherkörper (44) des Kraftstoffeinspritzsystems (96) zugeordnet ist, entweder über die Steuereinheit (68) oder das Kupplungssteuergerät (78) für eine zweite Kupplung (24) direkt angesteuert wird,
oder
das Druckregelventil (48) über das Fahrzeugsteuergerät (82) oder über das Kupplungssteuergerät (78), die ihrerseits die Steuereinheit (68) ansteuern, indirekt angesteuert wird.

6. Hybridantriebsstrang (10) gemäß Anspruch 3, **dadurch gekennzeichnet, dass** zumindest eine Hochvoltbatterie (26) vorgesehen ist, die über mindestens einen DC/DC-Wandler (30) mit einer Niedervoltbatterie (28) und/oder einem Fahrzeugbordnetz (72) elektrisch verbunden ist und in die mindestens eine Hochvoltbatterie (26) im Betriebsmodus Rekuperationsbetrieb elektrische Energie eingespeist wird.

## Claims

1. Method for maintaining or adapting a system pressure in a fuel injection system (96) of an internal combustion engine (12) which is part of a hybrid drivetrain (10) comprising at least one further drive (14), having the following method steps:
(a) continuously monitoring a system pressure level in a high-pressure accumulator body (44) of the fuel injection system (96) by means of a pressure sensor (46),
(b) maintaining or adapting the system pressure via a pressure regulation valve (48) in operating modes in which the internal combustion engine (12) is separated from the hybrid drivetrain (10),
(c) actuating the pressure regulation valve (48) via a control unit (68), a vehicle control device (82) or a clutch control device (78),
wherein, when the internal combustion engine (12) is decoupled from the hybrid drivetrain (10), the pressure regulation valve (48) is actuated via the clutch control device (78), the control unit (68) or the vehicle control device (82) such that a pressure-holding function implemented in the pressure regulation valve (48) is activated, and wherein, shortly prior to the internal combustion engine (12) being connected, the system pressure presently prevailing in the high-pressure accumulator body (44) is adapted, specifically such that, if the system pressure in the high-pressure accumulator body (44) is too high, fuel is discharged therefrom into a tank (58), or if the system pressure in the high-pressure accumulator body (44) is too low, a build-up of system pressure therein is realized via a high-pressure pump (52).

2. Method according to Claim 1, **characterized in that** the pressure regulation valve (48) is actuated directly via the control unit (68) or the clutch control device (78), or indirectly via the vehicle control device (82) or the clutch control device (78).

3. Hybrid drivetrain (10) having an internal combustion engine (12), at least one further drive (14) and at least one clutch (22, 24),
wherein the internal combustion engine (12) is an autoignition internal combustion engine which comprises a high-pressure accumulator injection system (96), the high-pressure accumulator body (44) of which has a pressure regulation valve (48) which regulates a system pressure in the high-pressure accumulator body (44) in a manner dependent on the target system pressure (42), existing prior to a recoupling into the hybrid drivetrain, for the present operating point of the internal combustion engine (12), wherein a pressure sensor (46) is assigned to the high-pressure accumulator body (44) and the in each case prevailing pressure in the high-pressure accumulator body (44) is detected via the pressure sensor (46), **characterized in that** the pressure regulation valve (48) is actuated via a clutch control device (78), a control unit (68) or a vehicle control device (82) such that, when the internal combustion engine (12) is decoupled from the hybrid drivetrain (10), a pressure-holding function implemented in the pressure regulation valve (48) is activated, and, shortly prior to a connection of the internal combustion engine (12), the system pressure presently prevailing in the high-pressure accumulator body (44) is adapted, specifically such that, if the system pressure in the high-pressure accumulator body (44) is too high, fuel is discharged therefrom into a tank (58), or if the system pressure in the high-pressure accumulator body (44) is too low, a build-up of system pressure therein is realized via a high-pressure pump (52).

4. Hybrid drivetrain (10) according to Claim 3, **characterized in that** the hybrid drivetrain (10) is designed as a parallel hybrid drivetrain and comprises a first clutch (22) between the at least one drive (14) and the vehicle transmission (16) and a second clutch (24) between the at least one drive (14) and the internal combustion engine (12).

5. Hybrid drivetrain (10) according to Claim 3, **characterized in that** the pressure-holding valve (48), which is assigned to the high-pressure accumulator body (44) of the fuel injection system (96), is actuated directly either via the control unit (68) or the clutch control device (78) for a second clutch (24),
or the pressure regulation valve (48) is actuated indirectly via the vehicle control device (82) or via the clutch control device (78), which for their part actuate the control unit (68).

6. Hybrid drivetrain (10) according to Claim 3, **characterized in that** provision is made of at least one high-voltage battery (26), which is electrically connected via at least one DC/DC converter (30) to a low-voltage battery (28) and/or to a vehicle on-board electrical system (72), and electrical energy is fed into the at least one high-voltage battery (26) in the recuperation operation operating mode.

## Revendications

1. Procédé de maintien ou d'adaptation d'une pression de système dans un système d'injection de carburant (96) d'un moteur à combustion interne (12) qui fait partie d'une chaîne cinématique hybride (10) qui comporte au moins un autre entraînement (14), comprenant les étapes de procédé suivantes :
(a) un niveau de pression de système dans un corps d'accumulateur haute pression (44) du système d'injection de carburant (96) est surveillé en continu au moyen d'un capteur de pression (46),
(b) dans des modes de fonctionnement dans lesquels le moteur à combustion interne (12) est séparé de la chaîne cinématique hybride (10), le maintien ou l'adaptation de la pression de système s'effectue par le biais d'une soupape de régulation de pression (48),
(c) la commande de la soupape de régulation de pression (48) s'effectue par le biais d'une unité de commande (68), d'un appareil de commande de véhicule (82) ou d'un appareil de commande d'embrayage (78),
dans lequel, lors du désaccouplement du moteur à combustion interne (12) de la chaîne cinématique hybride (10), la soupape de régulation de pression (48) est commandée par le biais de l'appareil de commande d'embrayage (78), de l'unité de commande (68) ou de l'appareil de commande de véhicule (82) de telle sorte qu'une fonction de maintien de pression implémentée dans la soupape de régulation de pression (48) soit activée, et
dans lequel, juste avant une connexion du moteur à combustion interne (12), la pression de système régnant effectivement dans le corps d'accumulateur haute pression (44) est adaptée, et ce de telle sorte qu'en cas de pression de système trop élevée dans le corps d'accumulateur haute pression (44), du carburant soit dirigé hors de celui-ci dans un réservoir (58), ou qu'en cas de pression de système trop basse dans le corps d'accumulateur haute pression (44), une augmentation de la pression de système dans celui-ci s'effectue par le biais d'une pompe haute pression (52).

2. Procédé selon la revendication 1, **caractérisé en ce que** la soupape de régulation de pression (48) est commandée directement par le biais de l'unité de commande (68) ou de l'appareil de commande d'embrayage (78), ou indirectement par le biais de l'appareil de commande de véhicule (82) ou de l'appareil de commande d'embrayage (78) .

3. Chaîne cinématique hybride (10) comprenant un moteur à combustion interne (12), au moins un autre entraînement (14) et au moins un embrayage (22, 24),
dans lequel le moteur à combustion interne (12) est un moteur à combustion interne à autoallumage qui comporte un système d'injection (96) à accumulateur haute pression dont le corps d'accumulateur haute pression (44) comporte une soupape de régulation de pression (48), laquelle régule une pression de système dans le corps d'accumulateur haute pression (44) en fonction de la pression de système de consigne (42) présente avant un ré-accouplement dans la chaîne cinématique hybride pour le point de fonctionnement effectif du moteur à combustion interne (12),
dans lequel un capteur de pression (46) est associé au corps d'accumulateur haute pression (44) et la pression régnant respectivement dans le corps d'accumulateur haute pression (44) est détectée par le biais du capteur de pression (46), **caractérisée en ce que** la soupape de régulation de pression (48) est commandée par le biais d'un appareil de commande d'embrayage (78), d'une unité de commande (68) ou d'un appareil de commande de véhicule (82) de telle sorte qu'en cas de désaccouplement du moteur à combustion interne (12) de la chaîne cinématique hybride (10), une fonction de maintien de pression implémentée dans la soupape de régulation de pression (48) soit activée, et que, juste avant une connexion du moteur à combustion interne (12), la pression de système régnant effectivement dans le corps d'accumulateur haute pression (44) soit adaptée, et ce de telle sorte qu'en cas de pression de système trop élevée dans le corps d'accumulateur haute pression (44), du carburant soit dirigé hors de celui-ci dans un réservoir (58), ou qu'en cas de pression de système trop basse dans le corps d'accumulateur haute pression (44), une augmentation de la pression de système dans celui-ci s'effectue par le biais d'une pompe haute pression (52).

4. Chaîne cinématique hybride (10) selon la revendication 3, **caractérisée en ce que** la chaîne cinématique hybride (10) est réalisée en tant que chaîne cinématique hybride parallèle et comporte un premier embrayage (22) entre ledit au moins un entraînement (14) et la boîte de vitesses de véhicule (16) ainsi qu'un deuxième embrayage (24) entre ledit au moins un entraînement (14) et le moteur à combustion interne (12).

5. Chaîne cinématique hybride (10) selon la revendication 3, **caractérisée en ce que** la soupape de maintien de pression (48) qui est associée au corps d'accumulateur haute pression (44) du système d'injection de carburant (96) est commandée directement soit par le biais de l'unité de commande (68) soit par le biais de l'appareil de commande d'embrayage (78) pour un deuxième embrayage (24),
ou
la soupape de régulation de pression (48) est commandée indirectement par le biais de l'appareil de commande de véhicule (82) ou par le biais de l'appareil de commande d'embrayage (78), lesquels commandent quant à eux l'unité de commande (68).

6. Chaîne cinématique hybride (10) selon la revendication 3, **caractérisée en ce qu'**au moins une batterie haute tension (26) est prévue, laquelle est connectée électriquement, par le biais d'au moins un convertisseur continu/continu (30), à une batterie basse tension (28) et/ou à un réseau de bord de véhicule (72) et de l'énergie électrique est injectée dans ladite au moins une batterie haute tension (26) en mode de fonctionnement de récupération.
